# FASCICULE DE BREVET EUROPEEN

(11) **EP 4 374 215 B1**
(45) Date de publication et mention de la délivrance du brevet: **04.02.2026**
(21) Numéro de dépôt: 22836316.4
(22) Date de dépôt: 05.12.2022
(51) Int. Cl.: G02F 1/35

(54) **ENSEMBLE D'EMISSION DE PHOTONS INTRIQUES EN CHAMP LIBRE**
ANORDNUNG ZUR EMISSION VERSCHRÄNKTER PHOTONEN IM FREIEN RAUM
ASSEMBLY FOR EMITTING ENTANGLED PHOTONS IN FREE SPACE

(30) Priorité: 10.12.2021 FR 2113225
(43) Date de publication de la demande: 29.05.2024
(73) Titulaire: Airbus Defence and Space SAS, 31402 Toulouse Cedex 4 (FR)
(72) Inventeur: HAAG, Herve, 31402 TOULOUSE CEDEX 4 (FR); THAIN, Andrew, 31402 TOULOUSE CEDEX 4 (FR)
(74) Mandataire: Plasseraud IP
(86) Numéro de dépôt international: PCT/FR2022/052249
(87) Numéro de publication internationale: WO 2023/105154

(56) Documents cités:
- EP-A1- 3 572 870
- US-B1- 7 489 436
- STEPANOV PETR ET AL: "Highly directive and Gaussian far-field emission from "giant" photonic", APPLIED PHYSICS LETTERS, AMERICAN INSTITUTE OF PHYSICS, 2 HUNTINGTON QUADRANGLE, MELVILLE, NY 11747, vol. 107, no. 14, 5 October 2015 (2015-10-05), XP012201077, ISSN: 0003-6951, [retrieved on 19010101], DOI: 10.1063/1.4932574
- DANIEL KL OI ET AL: "CubeSat quantum communications mission", ARXIV.ORG, CORNELL UNIVERSITY LIBRARY, 201 OLIN LIBRARY CORNELL UNIVERSITY ITHACA, NY 14853, 27 April 2017 (2017-04-27), XP080958286, DOI: 10.1140/EPJQT/S40507-017-0060-1

## Description

### Domaine technique

La présente description concerne un ensemble d'émission de photons intriqués en champ libre («free-space entangled photon emission assembly» en anglais). Elle concerne aussi un satellite de communication optique, notamment un satellite de distribution de clés quantiques, et un système de transmission de photons intriqués qui intègrent un tel ensemble d'émission.

### Technique antérieure

Les réseaux d'information quantique et la cryptographie quantique peuvent se baser sur l'émission de photons intriqués.

Par ailleurs, l'émission de photons en champ libre permet des distances de transmission qui sont très grandes, par opposition à des photons qui sont transmis à l'intérieur de fibres optiques. En effet, les valeurs de perte de canal pour la transmission dans l'espace extraterrestre et à travers l'atmosphère, en dehors de conditions météorologiques défavorables, sont beaucoup plus faibles que celles relatives à des modes de transmission guidée. Pour cette raison, il est prévu d'utiliser des ensembles d'émission de photons intriqués qui sont embarqués à bord de satellites pour constituer des réseaux d'information quantique, et aussi pour mettre en œuvre de la cryptographie quantique.

Dans ces applications, les deux photons d'une même paire de photons intriqués sont émis en direction de récepteurs qui sont séparés, selon des directions d'émission respectives qui sont différentes. Pour cela, il a été proposé d'utiliser deux optiques d'émission séparées pour transmettre les deux photons intriqués d'une même paire : l'un des deux photons intriqués étant transmis par l'une des deux optiques d'émission pointée vers l'un des deux récepteurs, et l'autre photon étant transmis par l'autre optique d'émission pointée vers l'autre récepteur. Une telle architecture d'ensemble d'émission de photons intriqués en champ libre est décrite par exemple dans EP 3 572 870 A1.

Mais la disposition en parallèle de plusieurs optiques d'émission, telles que des télescopes, au sein de l'ensemble d'émission rend cet ensemble complexe, encombrant et lourd. Il est alors difficile à intégrer dans un satellite de communication optique. En outre, réduire la taille de chaque optique d'émission provoque des pertes de canal par diffraction, ce qui réduit l'efficacité de la transmission optique.

### Problème technique

A partir de cette situation, un but de la présente invention est de proposer une nouvelle architecture d'ensemble d'émission de photons intriqués en champ libre, qui réduit la complexité, l'encombrement et le poids du système.

Un but annexe de l'invention est qu'une telle architecture procure des valeurs de perte de canal qui soient faibles.

### Résumé de l'invention

Pour atteindre l'un au moins de ces buts ou un autre, un premier aspect de l'invention propose un ensemble d'émission de photons intriqués en champ libre, qui comprend :
- au moins une source de photons intriqués, qui possède au moins deux sorties optiques et est adaptée pour produire des paires de photons intriqués, en transmettant un seul photon de chaque paire de photons intriqués par chaque sortie optique de la source, et
- des moyens de connexion optique qui sont reliés aux deux sorties optiques de chaque source de photons intriqués.

Selon l'invention, l'ensemble d'émission de photons intriqués en champ libre comprend au moins une optique d'émission, qui est adaptée pour transmettre en sortie des photons reçus dans une surface focale de cette optique d'émission. L'optique d'émission est commune aux deux sorties optiques de la source de photons intriqués, chacune de ces deux sorties optiques de la source de photons intriqués étant reliée par les moyens de connexion optique à un endroit de la surface focale qui est distant de l'endroit auquel est reliée l'autre sortie optique de la même source de photons intriqués. Ainsi, les deux photons d'une même paire de photons intriqués sont transmis en sortie par l'optique d'émission selon des directions d'émission respectives qui sont différentes.

Dans le cadre de la présente description, et de façon usuelle pour l'Homme du métier, des moyens de connexion optique désignent de façon générale des dispositifs d'interface qui sont capables de transmettre du rayonnement entre deux points, quelle que soit la constitution de ces moyens. Par exemple, mais de façon non-exclusive, des moyens de connexion optique peuvent être constitués par des fibres optiques et/ou par un commutateur optique matriciel commandé. Dans le contexte de la présente invention, les moyens de connexion optique constituent une interface entre la source de photons intriqués et l'optique d'émission.

De même, aussi dans le cadre de la présente description, et aussi de façon usuelle pour l'Homme du métier, une optique d'émission désigne un système optique qui produit la fonction de transmettre dans l'espace libre du rayonnement reçu dans un plan focal de cette optique d'émission. Une telle optique d'émission détermine notamment la forme et l'orientation du faisceau du rayonnement qui est émis dans le champ libre, et peut avoir de multiples configurations, notamment de type télescope. Possiblement, mais de façon non-exclusive, le rayonnement peut être reçu dans le plan focal de l'optique d'émission par l'intermédiaire d'un guide optique, tel qu'une fibre optique.

Un ensemble d'émission qui est conforme à l'invention peut être adapté pour que la direction d'émission de chaque photon soit déterminée par réglage d'un positionnement individuel de l'endroit dans la surface focale de l'optique d'émission où ce photon est délivré. En particulier, les moyens de connexion optique peuvent comprendre au moins un actionneur de réglage des positionnements individuels des endroits dans la surface focale où les photons sont délivrés. Un tel actionneur est adapté pour produire des déplacements parallèles à la surface focale, de l'endroit auquel est délivré chaque photon, en fonction d'au moins une commande de déplacement qui est reçue par l'actionneur. Dans des modes de réalisation possibles de l'invention, chaque actionneur peut être de type piézoélectrique. Dans d'autres modes de réalisation aussi possibles, chaque actionneur peut comporter au moins un miroir mobile, par exemple tel que désigné par l'acronyme FSM pour «Fast Steering Mirror» en anglais ou miroir orientable rapide. Dans ce dernier cas, l'actionneur peut constituer ou faire partie d'un système de pointage fin qui est dédié au réglage de la position dans la surface focale où l'un des photons est délivré.

En combinaison avec le réglage du positionnement individuel de l'endroit où chaque photon est délivré dans la surface focale de l'optique d'émission, sa direction d'émission peut être déterminée en outre par un pointage de l'optique d'émission. Un tel pointage peut être réglable, et/ou activé pour compenser des vibrations qui sont subies par l'ensemble d'émission.

De façon générale pour l'invention, des volumes de répartition respectifs des deux photons de chaque paire de photons intriqués à l'intérieur de l'optique d'émission peuvent être au moins partiellement superposés. Autrement dit, l'optique d'émission est au moins en partie constituée de composants optiques qui sont communs aux deux photons de chaque paire de photons intriqués.

Aussi de façon générale pour l'invention, l'optique d'émission peut être constituée par un télescope unique.

Dans des modes préférés de réalisation de l'invention, les moyens de connexion optique peuvent comprendre des segments de fibre optique. En effet, pour connecter optiquement chaque source de photons intriqués aux endroits de la surface focale de l'optique d'émission, les technologies à fibres optiques présentent l'avantage d'être légères et de nécessiter peu ou presqu'aucune opération d'alignement optique. Pour de tels modes de réalisation à fibre optique, chacun des segments de fibre optique qui est relié à un des endroits de la surface focale de l'optique d'émission, peut être muni en sortie d'un système optique divergent. Ce système optique divergent est adapté pour que du rayonnement qui sort par le segment de fibre optique en direction de l'optique d'émission possède une structure d'onde divergente avec un centre de divergence qui est situé sur la surface focale. De cette façon, le rayonnement qui est transmis par l'optique d'émission possède, à la sortie de celle-ci, une structure de faisceau collimaté.

Encore de façon générale pour l'invention, la surface focale de l'optique d'émission peut posséder une courbure, par exemple du fait de l'aberration optique qui est couramment appelée courbure de champ. Alors, les endroits de cette surface focale auxquels sont reliées les sorties optiques de chaque source de photons intriqués par les moyens de connexions optiques, peuvent avantageusement être décalés entre eux conformément à cette courbure, en projection sur un axe optique de l'optique d'émission.

Encore de façon générale pour l'invention, l'ensemble d'émission peut comprendre plusieurs sources de photons intriqués qui sont reliées à différents endroits de la surface focale de l'optique d'émission par les moyens de connexion optique. Dans ce cas, l'optique d'émission est commune à cette pluralité de sources de photons intriqués.

Dans des modes particuliers de réalisation de l'invention, les moyens de connexion optique peuvent comprendre un commutateur optique matriciel, celui-ci comprenant plusieurs ports optiques d'entrée, plusieurs ports optiques de sortie et au moins une entrée d'adressage, et étant adapté pour transmettre à l'un de ses ports optiques de sortie un photon qui est reçu par l'un de ses ports optiques d'entrée en fonction d'une consigne d'adressage reçue sur l'entrée d'adressage. Dans ce cas, pour chaque source de photons intriqués, ses deux sorties optiques sont reliées à des ports optiques d'entrée distincts du commutateur optique matriciel.

Un deuxième aspect de l'invention propose un satellite de communication optique qui comprend :
- un système de contrôle d'attitude et d'orbite ;
- un ensemble d'émission de photons intriqués en champ libre qui est conforme au premier aspect de l'invention ; et
- un contrôleur de mission, qui est connecté au système de contrôle d'attitude et d'orbite et à au moins une entrée de contrôle de l'ensemble d'émission de photons intriqués en champ libre.
Le contrôleur de mission est alors adapté pour déclencher des émissions de paires de photons intriqués, avec les deux photons de chaque paire qui sont transmis par l'optique d'émission commune à ces deux photons, selon des directions d'émission respectives qui sont différentes.

Lorsque les moyens de connexion optique comprennent un commutateur optique matriciel et/ou lorsque chaque endroit dans la surface focale de l'optique d'émission auquel un photon est délivré est réglable par un actionneur, l'entrée de contrôle de l'ensemble d'émission de photons intriqués en champ libre comprend l'entrée d'adressage du commutateur optique matriciel et/ou au moins une entrée de commande de déplacement de l'actionneur. Dans ce cas, l'adressage du commutateur optique matriciel et/ou la commande de l'actionneur peut (peuvent) être effectué(s) par l'intermédiaire du contrôleur de mission.

Enfin, un troisième aspect de l'invention propose un système de transmission de photons intriqués, qui comprend un satellite conforme au deuxième aspect de l'invention et au moins deux stations de réception adaptées pour être en communication avec ce satellite. Les stations de réception peuvent être, notamment, situées à la surface de la Terre, telles que couramment désignées par stations-sol.

Un premier avantage de l'invention est la structure simplifiée de l'ensemble d'émission de photons intriqués en champ libre. Il en résulte d'une part un gain de coût de fabrication, et d'autre part une facilité de mise en œuvre.

Un autre avantage de l'invention est un encombrement et un poids de l'ensemble d'émission qui sont réduits.

Encore un autre avantage de l'invention est la facilité avec laquelle peut être augmenté le nombre d'émissions qui sont effectuées simultanément vers des paires différentes de récepteurs, notamment des paires de stations de réception au sol situées sur Terre.

Encore un autre avantage de l'invention est que, l'optique d'émission étant commune aux photons émis, sa taille peut être plus grande que les tailles individuelles d'optiques d'émission qui sont multiples. Grâce au diamètre de pupille plus grand qui est possible ainsi, la contribution de la diffraction aux pertes de canal peut être diminuée. Les valeurs de pertes de canal peuvent alors être réduites.

Encore un autre avantage de l'invention réside dans le fait que l'ensemble d'émission peut être adapté facilement pour tenir compte d'aberrations optiques de l'optique d'émission, telles qu'une courbure de champ ou des distorsions d'image.

### Brève description des figures

Les caractéristiques et avantages de la présente invention apparaîtront plus clairement dans la description détaillée ci-après d'exemples de réalisation non-limitatifs, en référence aux figures annexées parmi lesquelles :
[Fig. 1] montre un système de transmission de photons intriqués qui est conforme à l'invention ;
[Fig. 2] illustre un ensemble d'émission de photons intriqués en champ libre qui est conforme à un premier mode de réalisation de l'invention ;
[Fig. 3] correspond à [Fig. 2] pour un deuxième mode de réalisation de l'invention ;
[Fig. 4] correspond à [Fig. 2] pour un troisième mode de réalisation de l'invention ;
[Fig. 5] correspond à [Fig. 2] pour un quatrième mode de réalisation de l'invention ; et
[Fig. 6] correspond à [Fig. 4] pour un perfectionnement de l'invention.

### Description détaillée de l'invention

Pour raison de clarté, les dimensions des éléments qui sont représentés dans ces figures ne correspondent ni à des dimensions réelles, ni à des rapports de dimensions réels. En outre, certains de ces éléments ne sont représentés que symboliquement, et des références identiques qui sont indiquées dans des figures différentes désignent des éléments identiques ou qui ont des fonctions identiques.

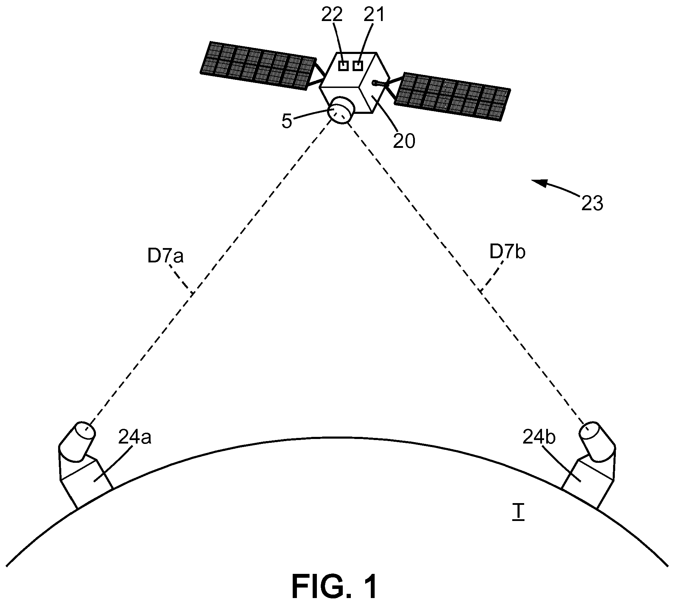

Conformément à [Fig. 1], un système de transmission de photons intriqués 23 comprend un satellite 20 et deux stations-sol de réception 24a et 24b qui sont situées à la surface de la Terre, désignée par la référence T. De façon usuelle, le satellite 20 est équipé d'un système de contrôle d'attitude et d'orbite 21 et d'un contrôleur de mission 22. Dans le cas présent, et comme cela sera repris plus loin, le contrôleur de mission 22 est adapté pour contrôler une mission qui comporte d'émettre, à partir du satellite 20, des paires de photons intriqués en direction des stations-sol de réception 24a et 24b. Une telle mission peut être la distribution de clés quantiques. Pour cela, un ensemble d'émission de photons intriqués en champ libre est en embarqué à bord du satellite 20. Cet ensemble d'émission comporte une optique d'émission 5, dont une partie externe est visible dans [Fig. 1]. Les autres composants de l'ensemble d'émission seront décrits en référence aux figures suivantes. La mission comporte d'émettre simultanément les deux photons d'une même paire de photons intriqués en direction des deux stations-sol de réception 24a et 24b : l'un des deux photons intriqués à destination de la station-sol de réception 24a selon la direction d'émission D7a, et l'autre photon intriqué à destination de la station-sol de réception 24b selon la direction d'émission D7b. Le satellite 20 peut être géostationnaire, mais pas exclusivement. Dans le cas où il n'est pas géostationnaire, il devrait être pourvu d'un système d'acquisition et de poursuite de cible.

De façon usuelle, l'optique d'émission 5 peut être munie d'un système de pointage général (non-représenté) à bord du satellite 20. Ce système de pointage général permet d'orienter un axe optique de l'optique d'émission 5 dans une direction voulue. Eventuellement, l'optique d'émission 5 peut être fixe par rapport à une plateforme du satellite 20, et dans ce cas, le système de pointage général de l'optique d'émission 5 est constitué par le système de variation d'attitude du satellite 20.

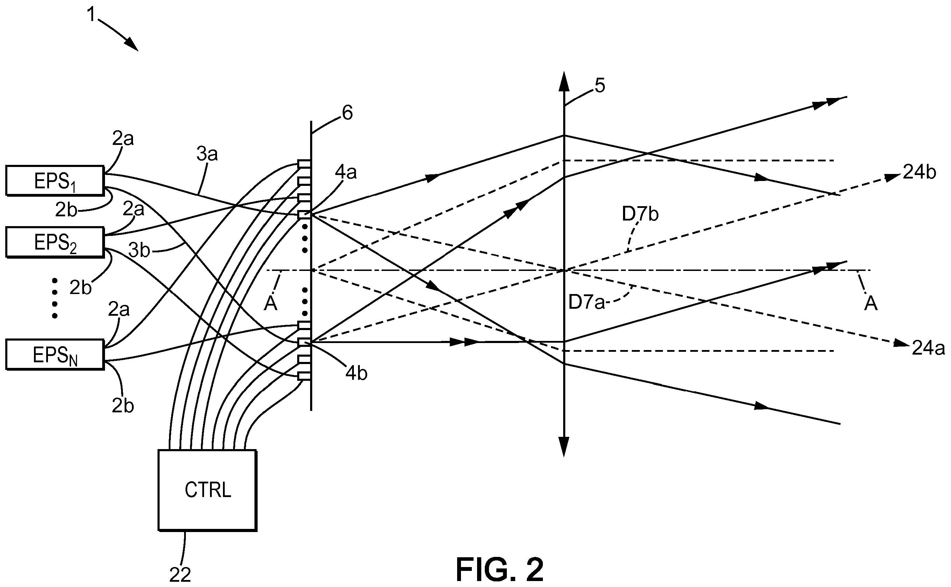

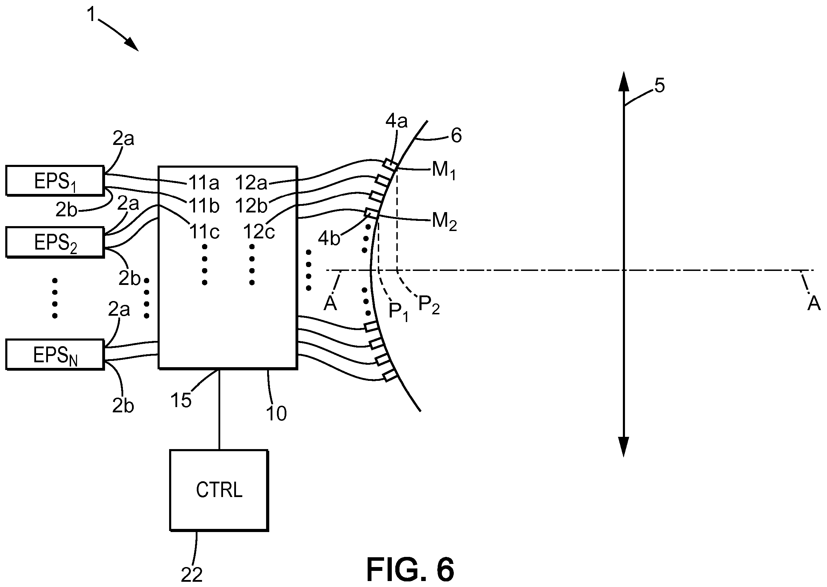

Dans [Fig. 2] à [Fig. 6], la référence 1 désigne globalement l'ensemble d'émission de photons intriqués en champ libre, et le contrôleur de mission 22 est noté CTRL. L'ensemble d'émission 1 comprend une optique d'émission 5, au moins une source de photons intriqués, par exemple les sources EPS₁, EPS₂,..., EPS_{N}, où N est un nombre entier supérieur ou égal à 1, par exemple inférieur ou égal à 32, et des moyens de connexion optique qui sont intermédiaires entre les sources EPS₁, EPS₂,..., EPS_{N} et l'optique d'émission 5. Par exemple, l'optique d'émission 5 peut être un télescope unique, d'un type et d'une constitution qui sont connus de l'Homme du métier. Pour raison de clarté des figures, un tel télescope 5 est représenté symboliquement sous forme d'une lentille unique, étant entendu que le télescope peut comporter deux ou trois miroirs et éventuellement des composants optiques additionnels. L'optique d'émission 5 conjugue des directions d'émission de rayonnement collimaté avec des points d'une surface focale 6, et possède un axe optique A-A. Dans ces conditions, un point qui est situé à l'intersection de la surface focale 6 avec l'axe optique A-A est conjugué optiquement avec une direction d'émission qui est superposée à cet axe optique A-A. Autrement dit, une source lumineuse ponctuelle ou quasi-ponctuelle qui est située à l'intersection de la surface focale 6 avec l'axe optique A-A produit un rayonnement qui est transmis par l'optique d'émission 5 sous forme d'un faisceau collimaté parallèle à l'axe optique A-A. De même, chaque point de la surface focale 6, qui est en dehors de l'axe optique A-A, est conjugué optiquement avec une direction d'émission qui est oblique par rapport à l'axe optique A-A. Alors, le rayonnement d'une source lumineuse ponctuelle ou quasi-ponctuelle qui est située en ce point de la surface focale 6 est transmis par l'optique d'émission 5 sous forme d'un faisceau collimaté qui est parallèle à cette direction oblique. De façon connue, les directions d'émission de rayonnement collimaté en sortie de l'optique d'émission 5 sont associées une-à-une aux points de la surface focale 6. En première approximation, la surface focale 6 est plane, et appelée plan focal. Toutefois, en présence de l'aberration optique de courbure de champ pour l'optique d'émission 5, la surface focale 6 peut être courbe, par exemple avec une concavité qui est tournée vers l'optique d'émission 5.

Lors d'un fonctionnement de l'ensemble d'émission 1, par exemple lorsque la source EPS₁ émet deux photons intriqués, ceux-ci sont transmis simultanément vers l'extérieur par l'optique d'émission 5, de sorte que les deux photons ont des volumes de répartition qui sont superposés à l'intérieur de l'optique d'émission 5. En ce sens, l'optique d'émission 5 est commune aux deux photons intriqués, par opposition à des configurations connues avant la présente invention, où chacun des deux photons intriqués était transmis vers l'extérieur par une optique d'émission respective dédiée, séparée de celle qui transmettait l'autre photon. De même, dans la configuration proposée par l'invention pour l'ensemble d'émission 1, l'optique d'émission 5 est commune à plusieurs sources de photons intriqués, en ce sens que des photons qui sont produits simultanément par au moins deux de ces sources ont des volumes de répartition qui sont encore superposés à l'intérieur de l'optique d'émission 5 lorsqu'ils sont transmis vers l'extérieur.

Chaque source de photons intriqués EPS₁, EPS₂,..., EPS_{N} peut être d'un type connu de l'Homme du métier, qu'il n'est pas nécessaire de décrire à nouveau ici. De façon générale dans toute la présente description, l'intrication des photons peut être par polarisation, en fréquence ou temporelle. Chaque source EPS₁, EPS₂,..., EPS_{N} comporte deux sorties optiques séparées, désignées par 2a et 2b, et est conçue pour qu'à chaque fonctionnement d'émission d'une paire de photons intriqués, un des photons de la paire soit délivré par la sortie optique 2a et l'autre photon de la même paire soit délivré simultanément mais par la sortie optique 2b. Dans le mode de réalisation de [Fig. 2], chaque sortie optique 2a ou 2b de l'une des sources de photons intriqués EPS₁, EPS₂,..., EPS_{N} est reliée optiquement par un segment de fibre optique à un endroit de délivrance des photons, qui est situé dans la surface focale 6 de l'optique d'émission 5. Ainsi, un segment de fibre optique 3a a sa première extrémité qui est connectée optiquement à la sortie optique 2a de la source de photons intriqués EPS₁, et a sa seconde extrémité, opposée à la première, qui est maintenue au niveau de la surface focale 6 par un actionneur 4a et un système optique divergent (non représenté). L'actionneur 4a et ce système optique divergent sont tels que du rayonnement qui sort par la seconde extrémité du segment de fibre optique 3a, en provenance de la source EPS₁, forme une onde divergente dont le centre de divergence est situé sur la surface focale 6. Cette onde divergente est alors transmise par l'optique d'émission 5, en sortie de celle-ci, sous forme d'une onde plane dont la direction d'émission est conjuguée avec l'endroit dans la surface focale 6 auquel est reliée la seconde extrémité du segment de fibre optique 3a. Dans des versions simplifiées du système optique divergent qui est situé à cette seconde extrémité du segment de fibre optique 3a, il peut être constitué par une microlentille, mais des versions plus élaborées peuvent être utilisées alternativement. L'actionneur 4a est conçu pour déplacer parallèlement à la surface focale 6 le centre de divergence du rayonnement qui sort par la seconde extrémité du segment de fibre optique 3a. Il est conçu pour pouvoir produire de tels déplacements selon deux directions qui sont perpendiculaires entre elles et localement parallèles à la surface focale 6. Des combinaisons de déplacements simultanés qui sont respectivement parallèles à chacune de ces directions permettent de produire des déplacements quelconques du centre de divergence du rayonnement qui sort par la seconde extrémité du segment de fibre optique 3a, tout en assurant que ce centre de divergence reste sur la surface focale 6.

Dans des premières réalisations possibles, l'actionneur 4a peut être à portions de matériau piézoélectrique, tel que décrit dans l'article intitulé «Starbugs : all-singing, all-dancing fibre positioning robots», de James Gilbert et al., Proc. SPIE 8450 (2012), DOI : 10.1117/12.924502. Un tel actionneur est conçu pour contenir la seconde extrémité du segment de fibre optique 3a ainsi que le système optique qui met sous forme d'onde divergente le rayonnement sortant de ce segment de fibre optique.

Dans d'autres réalisations possibles, l'actionneur 4a peut être un système optique à plusieurs composants, dont un miroir orientable qui est disposé dans une pupille du système. Le miroir orientable est alors avantageusement du type FST, pour «Fast Steering Mirror» en anglais.

L'actionneur 4b et le système optique divergent associé qui sont situés à la seconde extrémité du segment de fibre optique 3b, au niveau de la surface focale 6, sont de préférence identiques à ceux du segment de fibre optique 3a. Il en est de même pour tous les actionneurs et système optiques divergents qui délivrent les photons issus des autres sources de photons intriqués EPS₂,..., EPS_{N}, dans le cas où l'ensemble d'émission 1 comprend plusieurs telles sources. Ainsi, chaque actionneur 4a, 4b permet d'ajuster la direction d'émission d'un des photons, telle que cette direction émission est effective en aval de l'optique d'émission 5. En particulier, les deux photons intriqués de chaque paire peuvent être transmis selon des directions d'émission qui sont ajustables indépendamment l'une de l'autre. Dans [Fig. 2], le photon qui est transmis par la source EPS₁ par la sortie optique 2a de celle-ci, est émis selon la direction D7a en champ libre, en direction de la station-sol 24a, et le photon qui est transmis simultanément par la même source EPS₁ par son autre sortie 2b, est émis selon la direction D7b aussi en champ libre, en direction de la station-sol 24b.

Une telle utilisation d'actionneurs 4a, 4b qui sont dédiés individuellement aux positionnements des endroits dans la surface focale 6 où sont délivrés les photons intriqués, est compatible avec l'utilisation supplémentaire d'un système (non-représenté) d'ajustement de la direction de pointage de l'optique d'émission 5, c'est-à-dire d'ajustement de l'orientation de son axe optique A-A. Un tel système d'ajustement de la direction de pointage de l'optique d'émission 5 est alors commun à toutes les sources EPS₁, EPS₂,..., EPS_{N}. Il peut permettre notamment de compenser des vibrations qui affectent l'ensemble d'émission 1 à bord du satellite 20. Ainsi, la direction d'émission de chaque photon d'une paire de photons intriqués résulte des fonctionnements suivants, qui sont combinés :
- le contrôle de l'attitude du satellite 20, tel qu'effectué par le système de contrôle d'attitude et d'orbite 21 ;
- le contrôle du pointage de l'optique d'émission 5, tel qu'effectué de façon usuelle par le contrôleur de mission 22 ; et
- le déplacement de l'endroit dans la surface focale 6 ou le photon est délivré, qui est commandé par le contrôleur de mission 22.

Dans le mode de réalisation de [Fig. 2], les actionneurs 4a et 4b sont contrôlés pat le contrôleur de mission 22. Pour cela, ce dernier possède deux fois plus de sorties de commande que le nombre des actionneurs 4a et 4b, avec deux sorties de commande distinctes qui sont dédiées à chaque actionneur. Ces deux sorties de commande sont reliées à deux entrées de l'actionneur 4a, 4b pour contrôler ses déplacements selon les deux directions parallèles à la surface focale 6 et perpendiculaires entre elles. Pour raison de clarté de [Fig. 2], une seule liaison de commande est représentée entre le contrôleur de mission 22 et chaque actionneur 4a, 4b. Toutefois, un inconvénient de ce mode de réalisation est la faible amplitude des déplacements qui sont ainsi réalisables, pour les endroits dans la surface focale 6 auxquels les photons sont délivrés.

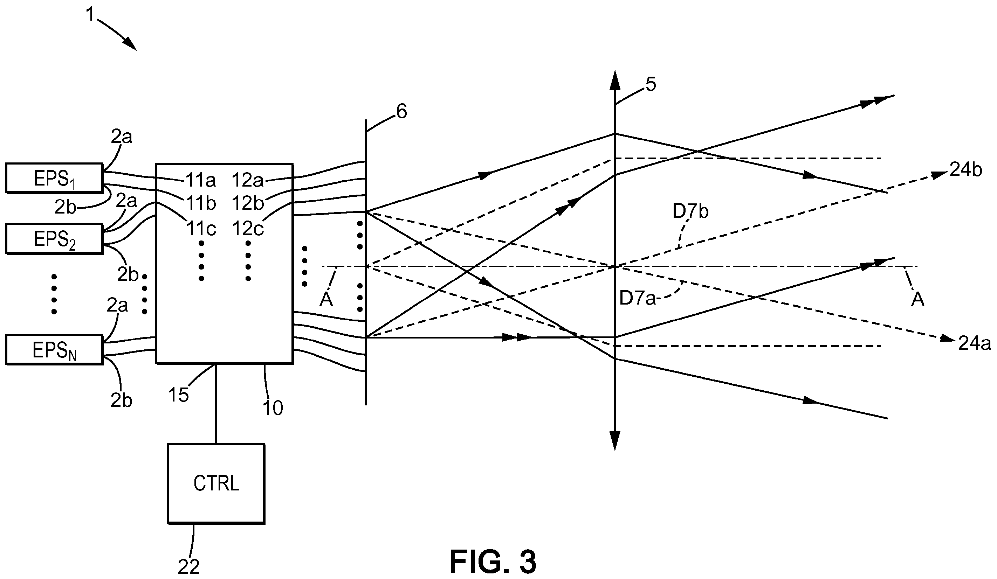

Dans le mode de réalisation de [Fig. 3], la ou les source(s) de photons intriqués EPS₁, EPS₂,..., EPS_{N} est (sont) reliée(s) optiquement à la surface focale 6 par l'intermédiaire d'un commutateur optique matriciel 10. Un tel commutateur 10 possède d'une part un ensemble de ports optiques d'entrée 11a, 11b, 11c,... et d'autre part un ensemble de ports optiques de sortie 12a, 12b, 12c,... Il possède en outre une entrée d'adressage 15 et est conçu pour établir un chemin optique entre certains au moins de ses ports optiques d'entrée et certains de ses ports optiques de sortie, tels que ces ports optiques d'entrée et de sortie sont identifiés à un instant donné dans une consigne d'adressage qui est transmise par le contrôleur de mission 22 à l'entrée d'adressage 15. Par exemple, le commutateur optique matriciel 10 peut être commandé ainsi pour transmettre un photon intriqué qui est reçu par son port optique d'entrée 11a, en provenance de la source EPS₁, à son port optique de sortie 12b, et transmettre l'autre photon intriqué qui est reçu simultanément par son port optique d'entrée 11b, aussi en provenance de la source EPS₁, à son port optique de sortie 12c. Le commutateur 10 peut aussi transmettre simultanément des photons qui proviennent des autres sources EPS₂,..., EPS_{N}. Les sorties optiques 2a et 2b de chaque source de photons intriqués EPS₁, EPS₂,..., EPS_{N} sont alors reliées fixement aux ports optiques d'entrée 11a, 11b, 11c,... du commutateur 10, par exemple par des segments respectifs de fibre optique, et les ports optiques de sortie 12a, 12b, 12c,... de ce commutateur 10 peuvent être reliés à des endroits respectifs fixes dans la surface focale 6, par exemple par des segments de fibre optique additionnels. Ce mode de réalisation, tel qu'illustré par [Fig. 3], est approprié pour émettre chaque photon selon une direction qui est sélectionnée dans un ensemble prédéterminé de directions, qui sont conjuguées avec des endroits fixes dans la surface focale 6. Notamment, il permet des commutations agiles, pour chaque sortie optique de source de photons intriqués, entre des directions d'émission qui peuvent être très séparées angulairement. Par contre, il n'est pas adapté pour réaliser des ajustements fins et indépendants des directions d'émission.

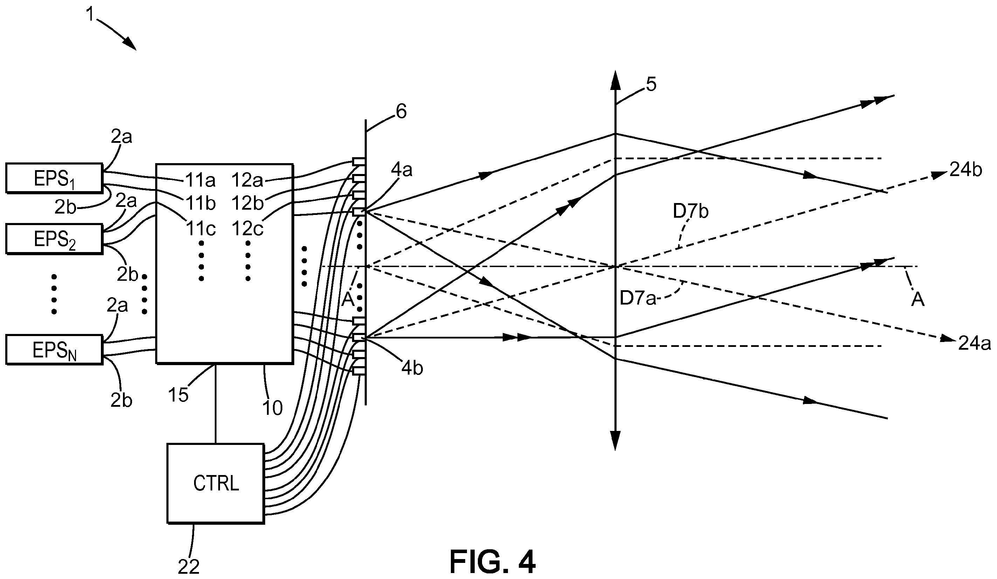

Les inconvénients respectifs qui viennent d'être cités pour les modes de réalisation de [Fig. 2] et [Fig. 3] sont supprimés dans le mode de réalisation de [Fig. 4]. Ce dernier mode de réalisation est une combinaison des deux précédents, en associant l'utilisation des actionneurs 4a, 4b avec l'utilisation du commutateur optique matriciel 10. Dans ce cas, le contrôleur de mission 22 est connecté d'une part pour commander les actionneurs 4a, 4b, par exemple en utilisant des tensions de commande variables, et pour transmettre simultanément les consignes d'adressage à l'entrée 15 du commutateur 10.

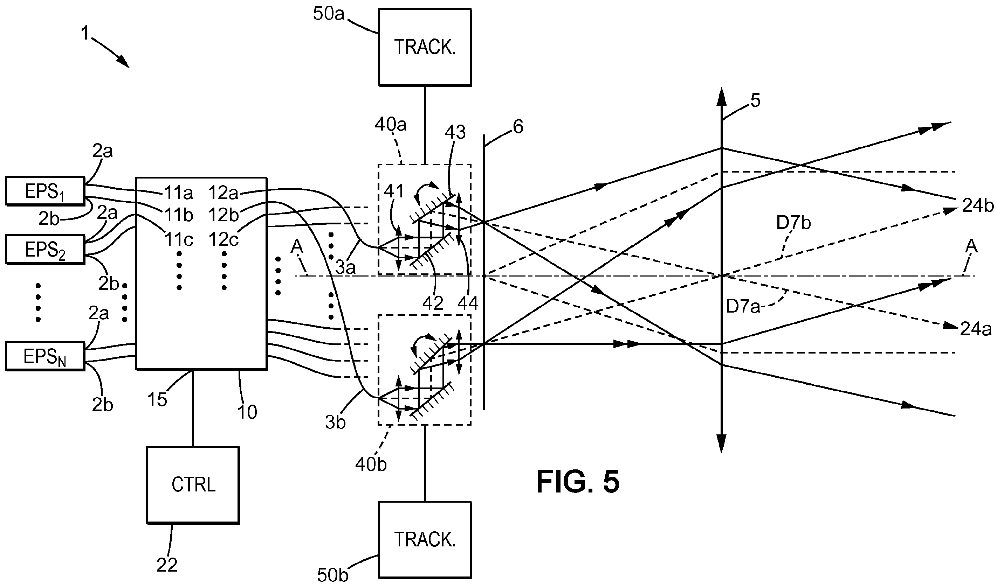

Dans le mode de réalisation de [Fig. 5], chaque actionneur qui est utilisé pour déplacer, parallèlement à la surface focale 6, le centre de divergence du rayonnement qui sort par la seconde extrémité de l'un des segments de fibre optique est remplacé individuellement par un système de pointage fin. Ainsi, l'actionneur 4a est remplacé par le système de pointage fin 40a, l'actionneur 4b est remplacé par le système de pointage fin 40b, et de même pour chaque autre actionneur sans que le système de pointage fin par lequel il est remplacé soit représenté, pour raison de clarté de la figure. Tous les systèmes de pointage fin ainsi utilisés peuvent être d'un même modèle, notamment d'un modèle tel que disponible commercialement. Par exemple, le système de pointage fin 40a peut comprendre, dans l'ordre selon le sens de propagation de chaque photon qui est issu du segment de fibre optique 3a tel que représenté dans [Fig. 5] : une première lentille de collimation 41, un miroir de renvoi fixe 42, un miroir orientable 43 qui peut être tourné autour de deux axes de rotation perpendiculaires l'un à l'autre, et une lentille de focalisation 44. Toutefois, d'autres constitutions de systèmes de pointage fin peuvent être utilisées alternativement. La seconde extrémité du segment de fibre optique 3a est placée fixement par rapport au système de pointage fin 40a, de sorte que la lentille de collimation 41 transforme du rayonnement qui sort par cette seconde extrémité de fibre optique 3a en une onde plane entre cette lentille de collimation 41 et la lentille de focalisation 44. En outre, le système de pointage fin 40a est placé fixement par rapport à la surface focale 6 de sorte que le foyer-image de la lentille de focalisation 44 soit sur cette surface focale 6. Dans ces conditions, une inclinaison variable du miroir orientable 43 provoque un déplacement à l'intérieur de la surface focale 6, d'un point de convergence d'une onde qui correspond à chaque photon issu du segment de fibre optique 3a. Ainsi, d'une façon qui est équivalente optiquement au mode de réalisation de [Fig. 4], chaque système de pointage fin 40a, 40b permet de régler le positionnement individuel de l'endroit dans la surface focale 6 où est délivré chaque photon qui est transmis par ce système de pointage fin.

Chacun des systèmes de pointage fin 40a, 40b peut être commandé par un système de poursuite de cible indépendant, tel que connu de l'Homme du métier. Un tel système de poursuite de cible, qui est noté TRACK. dans [Fig. 5], utilise un signal optique qui est émis par chaque station-sol de réception 24a, 24b. De cette façon, la direction d'émission D7a, D7b de chaque photon par l'ensemble d'émission 1, provenant de l'une des sorties optiques 2a, 2b de n'importe laquelle des sources de photons intriqués EPS₁, EPS₂,...EPS_{N}, peut être asservie en temps réel à la direction apparente de l'une des stations-sol de réception 24a, 24b. Dans [Fig. 5], le système de poursuite de cible qui est dédié à commander le système de pointage fin 40a est désigné par la référence 50a, celui dédié au système de pointage fin 40b est désigné par la référence 50b, et un système de poursuite de cible séparé est associé identiquement à chaque autre système de pointage fin non-représenté.

De façon connue, chacun des systèmes de poursuite de cible 50a, 50b peut incorporer un capteur d'images qui est agencé pour saisir des images successives du contenu du champ de vue de l'optique d'émission 5. Ainsi, les signaux qui sont émis par la station-sol de réception 24a peuvent être détectés par le capteur d'images du système de poursuite de cible 50a, pour identifier dans chacune des images qui sont saisies par ce capteur d'images la direction D7a dans laquelle se trouve la station-sol de réception 24a. Le système de poursuite de cible 50a commande alors le système de pointage fin 40a pour diriger un photon émis vers la station-sol de réception 24a. Dans des modes de mise en œuvre possibles de tels systèmes de poursuite de cible 50a, 50b, chacun d'eux peut incorporer un capteur d'images qui est indépendant de ceux des autres systèmes de poursuite de cible. Toutefois, dans d'autres modes de mise en œuvre qui sont préférés, plusieurs des systèmes de poursuite de cible, voire tous les systèmes de poursuite de cible de l'ensemble d'émission 1, peuvent partager un capteur d'images commun, comme décrit dans la demande de brevet européen EP 1 777 844 A1. Une réduction supplémentaire de poids et d'encombrement, ainsi qu'une simplification d'architecture optique, en résultent pour l'ensemble d'émission 1.

Possiblement, l'utilisation des actionneurs 4a, 4b telle que décrite en référence à [Fig. 2] ou [Fig. 4] peut être combinée avec l'utilisation de systèmes de pointage fin telle que décrite en référence à [Fig. 5].

La pupille de l'optique d'émission 5 détermine l'ouverture angulaire des rayonnements émis par le système d'émission 1. Par exemple, un diamètre de cette pupille peut être compris entre 20 cm (centimètre) et 1 m (mètre). Plus ce diamètre pupillaire est grand, plus la tache du rayonnement émis est petite au niveau de la station-sol de réception à laquelle est destiné le rayonnement. L'exigence de précision de pointage pour chaque actionneur 4a, 4b ou chaque système de pointage fin 40a, 40b est alors cohérente avec le diamètre pupillaire de l'optique d'émission 5 : la précision de pointage est d'autant plus fine que la pupille est grande.

A titre d'exemple, pour tous les modes de réalisation qui ont été décrits, le système d'émission 1 peut permettre de modifier la direction d'émission de chaque photon avec une amplitude de variation comprise entre 10 µrad (microradian) et 100 µrad à l'intérieur de deux plans méridiens du champ de vue qui se coupent perpendiculairement le long de l'axe optique A-A.

[Fig. 6] reprend le mode de réalisation de [Fig. 4], dans le cas où la surface focale 6 est courbe. Les endroits dans cette surface focale auxquels sont reliés optiquement les segments de fibre optique qui proviennent du commutateur optique matriciel 10, sont alors décalés parallèlement à l'axe optique A-A conformément à leurs éloignements transversaux respectifs mesurés à partir de cet axe optique, et conformément à la courbure de la surface focale 6. Ainsi, P₁ et P₂ sont les points de projection respectifs sur l'axe optique A-A, des endroits M₁ et M₂ auxquels sont reliés deux segments de fibre optique différents qui proviennent du commutateur 10. Les points de projection P₁ et P₂ sont alors distants l'un de l'autre, du fait de la courbure de la surface focale 6. Un tel perfectionnement de l'invention, pour tenir compte d'une courbure de champ de l'optique d'émission 5, peut être appliqué de la même façon aux modes de réalisation de [Fig. 2] et [Fig. 3].

Dans les modes de réalisation de l'invention qui ont été décrits, les segments de fibre optique, le commutateur optique matriciel 10 s'il est utilisé, et les actionneurs 4a, 4b et/ou les systèmes de pointage fin 40a, 40b le cas échéant, constituent les moyens de connexion optique tels qu'introduits dans la partie générale de la description.

Il est entendu que l'invention peut être reproduite en modifiant des aspects secondaires des modes de réalisation qui ont été décrits en détail ci-dessus, tout en conservant certains au moins des avantages cités. Notamment, d'autres composants optiques peuvent être utilisés à la place de certains au moins de ceux qui ont été mentionnés, dans la mesure où ils produisent des fonctions équivalentes ou sensiblement équivalentes. Enfin, certaines mises en œuvre qui ont été mentionnées pour des modes de réalisation particuliers peuvent être combinées avec d'autres des modes de réalisation, tels que décrits en détail ou couverts par les revendications.

## Revendications

1. Ensemble d'émission de photons intriqués en champ libre (1), comprenant :
- au moins une source de photons intriqués (EPS₁, EPS₂,..., EPS_{N}), ladite source possédant au moins deux sorties optiques (2a, 2b) et étant adaptée pour produire des paires de photons intriqués, en transmettant un seul photon de chaque paire de photons intriqués par chaque sortie optique de ladite source ;
- des moyens de connexion optique qui sont reliés aux deux sorties optiques de chaque source de photons intriqués (EPS₁, EPS₂,..., EPS_{N}) ; et
- au moins une optique d'émission (5), qui est adaptée pour transmettre en sortie des photons reçus dans une surface focale (6) de ladite optique d'émission, ladite optique d'émission (5) étant commune aux deux sorties optiques (2a, 2b) de la source de photons intriqués (EPS₁, EPS₂,..., EPS_{N}), chacune desdites deux sorties optiques de ladite source de photons intriqués étant reliée par les moyens de connexion optique à un endroit de la surface focale (6) qui est distant de l'endroit auquel est reliée l'autre sortie optique de la même source de photons intriqués, de sorte que les deux photons d'une même paire de photons intriqués soient transmis en sortie par l'optique d'émission selon des directions d'émission (D7a, D7b) respectives qui sont différentes,
la direction d'émission (D7a, D7b) de chaque photon étant déterminée par réglage d'un positionnement individuel de l'endroit dans la surface focale (6) de l'optique d'émission (5) où ledit photon est délivré,
l'ensemble d'émission de photons intriqués en champ libre (1) étant **caractérisé en ce que** les moyens de connexion optique comprennent au moins un actionneur (4a, 4b) de réglage des positionnements individuels des endroits dans la surface focale (6) où les photons sont délivrés, en étant adapté pour produire des déplacements parallèles à ladite surface focale en fonction d'au moins une commande de déplacement reçue par ledit actionneur.

2. Ensemble d'émission de photons intriqués en champ libre (1) selon la revendication 1, **caractérisé en ce que** l'actionneur (4a, 4b) est de type piézoélectrique.

3. Ensemble d'émission de photons intriqués en champ libre (1) selon l'a revendication 1 ou 2, **caractérisé en ce que** la direction d'émission (D7a, D7b) de chaque photon est également déterminée par un pointage de l'optique d'émission (5).

4. Ensemble d'émission de photons intriqués en champ libre (1) selon l'une quelconque des revendications précédentes, **caractérisé en ce que** des volumes de répartition respectifs des deux photons de chaque paire de photons intriqués à l'intérieur de l'optique d'émission (5) sont au moins partiellement superposés.

5. Ensemble d'émission de photons intriqués en champ libre (1) selon l'une quelconque des revendications précédentes, **caractérisé en ce qu'**il comprend un télescope unique qui constitue l'optique d'émission (5).

6. Ensemble d'émission de photons intriqués en champ libre (1) selon l'une quelconque des revendications précédentes, dans lequel les moyens de connexion optique comprennent des segments de fibre optique (3a, 3b).

7. Ensemble d'émission de photons intriqués en champ libre (1) selon la revendication 6, dans lequel chacun des segments de fibre optique qui est relié à un des endroits de la surface focale (6) de l'optique d'émission (5), est muni en sortie d'un système optique divergent, de sorte que du rayonnement qui sort par ledit segment de fibre optique en direction de l'optique d'émission, ait une structure d'onde divergente avec un centre de divergence qui est situé sur ladite surface focale.

8. Ensemble d'émission de photons intriqués en champ libre (1) selon l'une quelconque des revendications précédentes, dans lequel la surface focale (6) de l'optique d'émission (5) possède une courbure, et dans lequel les endroits de ladite surface focale auxquels sont reliées les sorties optiques (2a, 2b) de chaque source de photons intriqués (EPS₁, EPS₂,..., EPS_{N}) par les moyens de connexions optiques, sont décalés entre eux conformément à cette courbure, en projection sur un axe optique (A-A) de l'optique d'émission.

9. Ensemble d'émission de photons intriqués en champ libre (1) selon l'une quelconque des revendications précédentes, dans lequel l'optique d'émission (5) est commune à plusieurs sources de photons intriqués (EPS₁, EPS₂,..., EPS_{N}) qui sont reliées à différents endroits de la surface focale (6) de ladite optique d'émission par les moyens de connexion optique.

10. Ensemble d'émission de photons intriqués en champ libre (1) selon l'une quelconque des revendications précédentes, dans lequel les moyens de connexion optique comprennent un commutateur optique matriciel (10), ledit commutateur optique matriciel comprenant plusieurs ports optiques d'entrée (11a, 11b, 11c), plusieurs ports optiques de sortie (12a, 12b, 12c) et au moins une entrée d'adressage (15), et étant adapté pour transmettre à l'un desdits ports optiques de sortie un photon qui est reçu par l'un desdits ports optiques d'entrée en fonction d'une consigne d'adressage reçue sur l'entrée d'adressage,
et dans lequel pour chaque source de photons intriqués (EPS₁, EPS₂,..., EPS_{N}), les deux sorties (2a, 2b) de ladite source sont reliées à des ports optiques d'entrée distincts du commutateur optique matriciel (10).

11. Satellite (20) de communication optique, comprenant :
- un système de contrôle d'attitude et d'orbite (21) ;
- un ensemble d'émission de photons intriqués en champ libre (1) selon l'une quelconque des revendications précédentes ; et
- un contrôleur de mission (22), qui est connecté au système de contrôle d'attitude et d'orbite (21) et à au moins une entrée de contrôle de l'ensemble d'émission de photons intriqués en champ libre (1), ledit contrôleur de mission (22) étant adapté pour déclencher des émissions de paires de photons intriqués, avec les deux photons de chaque paire qui sont transmis par l'optique d'émission (5) commune auxdits deux photons, selon des directions d'émission (D7a, D7b) respectives qui sont différentes.

12. Satellite (20) selon la revendication 11, dans lequel l'ensemble d'émission de photons intriqués en champ libre (1) est selon la revendication 10, et dans lequel l'entrée de contrôle de l'ensemble d'émission de photons intriqués en champ libre comprend l'entrée d'adressage (15) du commutateur optique matriciel (10) et au moins une entrée de commande de déplacement de l'actionneur (4a, 4b).

13. Système de transmission de photons intriqués (23) comprenant un satellite (20) selon la revendication 11 ou 12, et au moins deux stations de réception (24a, 24b) adaptées pour être en communication optique avec le satellite.

## Patentansprüche

1. Anordnung zur Emission von verschränkten Photonen im freien Feld (1),
umfassend:
- wenigstens eine Quelle für verschränkte Photonen (EPS₁, EPS₂..., EPS_{N}), wobei die Quelle wenigstens zwei optische Ausgänge (2a, 2b) aufweist und dazu ausgelegt ist, Paare von verschränkten Photonen zu erzeugen, indem sie ein einzelnes Photon jedes Paares von verschränkten Photonen durch jeden optischen Ausgang der Quelle überträgt;
- optische Verbindungsmittel, die mit den beiden optischen Ausgängen jeder Quelle für verschränkte Photonen (EPS₁, EPS₂..., EPS_{N}) verbunden sind; und
- wenigstens eine Sendeoptik (5), die dazu ausgelegt ist, in einer Brennebene (6) der Sendeoptik empfangene Photonen auszugeben, wobei die Sendeoptik (5) beiden optischen Ausgängen (2a, 2b) der Quelle für verschränkte Photonen (EPS₁, EPS₂..., EPS_{N}) gemeinsam ist, wobei jeder der beiden optischen Ausgänge der Quelle für verschränkte Photonen durch die optischen Verbindungsmittel mit einer Stelle der Brennebene (6) verbunden ist, die von der Stelle entfernt ist, mit der der andere optische Ausgang derselben verschränkten Photonenquelle verbunden ist, sodass die beiden Photonen desselben Paares verschränkter Photonen durch die Emissionsoptik in jeweils unterschiedlichen Emissionsrichtungen (D7a, D7b) ausgegeben werden,
wobei die Emissionsrichtung (D7a, D7b) jedes Photons durch Einstellen einer individuellen Positionierung des Ortes in der Fokusfläche (6) der Emissionsoptik (5) bestimmt wird, an dem das Photon abgegeben wird,
wobei die Anordnung zur Emission von verschränkten Photonen im freien Feld (1) **dadurch gekennzeichnet ist, dass** die optischen Verbindungsmittel wenigstens ein Aktuator (4a, 4b) zum Einstellen der individuellen Positionierungen der Stellen in der Fokusfläche (6), an denen die Photonen abgegeben werden, umfasst, das so ausgebildet ist, dass es parallel zu der Fokusfläche Verschiebungen in Abhängigkeit von wenigstens einem von dem Aktuator empfangenen Verschiebungsbefehl erzeugt.

2. Anordnung zur Emission von verschränkten Photonen im freien Feld (1) nach Anspruch 1, **dadurch gekennzeichnet, dass** der Aktuator (4a, 4b) piezoelektrisch ist.

3. Anordnung zur Emission von verschränkten Photonen im freien Feld (1) nach Anspruch 1 oder 2, **dadurch gekennzeichnet, dass** die Emissionsrichtung (D7a, D7b) jedes Photons ebenfalls durch eine Ausrichtung der Emissionsoptik (5) bestimmt wird.

4. Anordnung zur Emission von verschränkten Photonen im freien Feld (1) nach einem der vorhergehenden Ansprüche, **dadurch gekennzeichnet, dass** die jeweiligen Verteilungsvolumina der beiden Photonen jedes Paares verschränkter Photonen innerhalb der Emissionsoptik (5) wenigstens teilweise überlagert sind.

5. Anordnung zur Emission von verschränkten Photonen im freien Feld (1) nach einem der vorhergehenden Ansprüche, **dadurch gekennzeichnet, dass** sie ein einziges Teleskop umfasst, das die Emissionsoptik (5) bildet.

6. Anordnung zur Emission von verschränkten Photonen im freien Feld (1) nach einem der vorhergehenden Ansprüche, wobei die optischen Verbindungsmittel Lichtleitersegmente (3a, 3b) umfassen.

7. Anordnung zur Emission von verschränkten Photonen im freien Feld (1) nach Anspruch 6, wobei jedes der Lichtleitersegmente, das mit einer der Stellen der Brennebene (6) der Emissionsoptik (5) verbunden ist, am Ausgang mit einem divergierenden optischen System versehen ist, so dass die Strahlung, die aus dem Lichtleitersegment in Richtung der Emissionsoptik austritt, eine divergierende Wellenstruktur mit einem Divergenzzentrum aufweist, das sich auf der Fokusfläche befindet.

8. Anordnung zur Emission von verschränkten Photonen im freien Feld (1) nach einem der vorhergehenden Ansprüche, wobei die Fokusfläche (6) der Emissionsoptik (5) eine Krümmung aufweist und wobei die Stellen der Fokusfläche, mit denen die optischen Ausgänge (2a, 2b) jeder Quelle für verschränkte Photonen (EPS₁, EPS₂..., EPS_{N}) durch die optischen Verbindungsmittel verbunden sind, entsprechend dieser Krümmung in Projektion auf eine optische Achse (A-A) der Emissionsoptik zueinander versetzt sind.

9. Anordnung zur Emission von verschränkten Photonen im freien Feld (1) nach einem der vorhergehenden Ansprüche, wobei die Emissionsoptik (5) mehreren verschränkten Photonenquellen (EPS₁, EPS₂..., EPS_{N}) gemeinsam ist, die an verschiedenen Stellen der Brennebene (6) der Emissionoptik durch die optischen Verbindungsmittel verbunden sind.

10. Anordnung zur Emission von verschränkten Photonen im freien Feld (1) nach einem der vorhergehenden Ansprüche, wobei die optischen Verbindungsmittel einen optischen Matrixschalter (10) umfassen, wobei der optische Matrixschalter mehrere optische Eingangsanschlüsse (11a, 11b, 11c) umfasst, mehrere optische Ausgangsanschlüsse (12a, 12b, 12c) und wenigstens einen Adressierungseingang (15) umfasst und dazu ausgelegt ist, an einen der optischen Ausgangsanschlüsse ein Photon zu übertragen, das von einem der optischen Eingangsanschlüsse empfangen wird, basierend auf einem Adressierungssignal,
das am Adressierungseingang empfangen wird,
und wobei für jede Quelle verschränkter Photonen (EPS₁, EPS₂..., EPS_{N}) die beiden Ausgänge (2a, 2b) dieser Quelle mit unterschiedlichen optischen Eingangsports des optischen Matrixschalters (10) verbunden sind.

11. Optischer Kommunikationssatellit (20), umfassend:
- ein Lage- und Bahnsteuerungssystem (21);
- eine Anordnung zur Emission von verschränkten Photonen im freien Feld (1) nach einem der vorhergehenden Ansprüche; und
- eine Missionssteuerung (22), die mit dem Lage- und Bahnsteuerungssystem (21) und wenigstens einem Steuereingang der Anordnung zur Emission von verschränkten Photonen im freien Feld (1) verbunden ist, wobei die Missionssteuerung (22) dazu ausgelegt ist, Emissionen von Paaren verschränkter Photonen auszulösen, wobei die beiden Photonen jedes Paares durch die beiden Photonen gemeinsame Emissionsoptik (5) in jeweils unterschiedlichen Emissionsrichtungen (D7a, D7b) übertragen werden.

12. Satellit (20) nach Anspruch 11, wobei die Anordnung zur Emission von verschränkten Photonen im freien Feld (1) gemäß Anspruch 10 ist, und wobei der Steuereingang der Anordnung zur Emission von verschränkten Photonen im freien Feld den Adressierungseingang (15) des optischen Matrixschalters (10) und wenigstens einen Eingang zur Steuerung der Bewegung des Stellglieds (4a, 4b) umfasst.

13. System zur Übertragung verschränkter Photonen (23), umfassend einen Satelliten (20) nach Anspruch 11 oder 12 und wenigstens zwei Empfangsstationen (24a, 24b), die für die optische Kommunikation mit dem Satelliten ausgelegt sind.

## Claims

1. An assembly (1) for emitting entangled photons into free space, comprising:
- at least one source of entangled photons (EPS₁, EPS₂,..., EPS_{N}), said source having at least two optical outputs (2a, 2b) and being adapted to produce pairs of entangled photons, by transmitting a single photon from each pair of entangled photons through each optical output of said source;
- optical connection means that are connected to the two optical outputs of each source of entangled photons (EPS ₁, EPS ₂, ..., EPS_{N}); and
- at least one emission optics (5), which is adapted to transmit as output photons received in a focal surface (6) of said emission optics, said emission optics (5) being common to both optical outputs (2a, 2b) of the source of entangled photons (EPS₁, EPS₂,..., EPS_{N}), each of said two optical outputs of said source of entangled photons being connected via optical connection means to a location in the focal surface (6) that is distant from the location to which the other optical output of the same source of entangled photons is connected, so that both photons of one and same pair of entangled photons are transmitted as output by the emission optics in respective emission directions (D7a, D7b) that are different,
the emission direction (D7a, D7b) of each photon is determined by an adjustment of an individual positioning of the location in the focal surface (6) of the emission optics (5) where the photon is delivered,
the assembly (1) for emitting entangled photons into free space being **characterised in that** the optical connection means comprise at least one actuator (4a, 4b) for adjusting the individual positioning of the locations in the focal surface (6) where the photons are delivered, and is adapted to produce movements parallel to said focal surface depending on at least one movement command received by said actuator.

2. The assembly (1) for emitting entangled photons into free space according to claim 1, **characterised in that** the actuator (4a, 4b) is of piezoelectric type.

3. The assembly (1) for emitting entangled photons into free space according to claim 1 or 2, **characterised in that** the emission direction (D7a, D7b) of each photon is also determined by a pointing of the emission optics (5).

4. The assembly (1) for emitting entangled photons into free space according to any one of the preceding claims, **characterised in that** respective distribution volumes of both photons in each pair of entangled photons within the emission optics (5) are at least partially superimposed.

5. The assembly (1) for emitting entangled photons into free space according to any one of the preceding claims, **characterised in that** it comprises a single telescope that constitutes the emission optics (5).

6. The assembly (1) for emitting entangled photons into free space according to any one of the preceding claims, wherein the optical connection means comprise optical fibre segments (3a, 3b).

7. The assembly (1) for emitting entangled photons into free space according to claim 6, wherein each of the optical fibre segments that is connected to one of the locations in the focal surface (6) of the emission optics (5) is provided at output with a divergent optical system, so that radiation that exits through said optical fibre segment in direction of the emission optics has a divergent wave structure with a divergence centre point that is located on said focal surface.

8. The assembly (1) for emitting entangled photons into free space according to any one of the preceding claims, wherein the focal surface (6) of the emission optics (5) has a curvature, and wherein the locations in said focal surface to which the optical outputs (2a, 2b) of each source of entangled photons (EPS₁, EPS₂, ..., EPS_{N}) are connected via the optical connection means are offset from one another in accordance with this curvature, when projected onto an optical axis (A-A) of the emission optics.

9. The assembly (1) for emitting entangled photons into free space according to any one of the preceding claims, wherein the emission optics (5) is common to several sources of entangled photons (EPS ₁, EPS ₂, ..., EPS_{N}) which are connected to different locations in the focal surface (6) of said emission optics by the optical connection means.

10. The assembly (1) for emitting entangled photons into free space according to any one of the preceding claims, wherein the optical connection means comprise a matrix optical switch (10), said matrix optical switch comprising several optical input ports (11a, 11b, 1le), several optical output ports (12a, 12b, 12c), and at least one addressing input (15), and being adapted to transmit to one of said optical output ports a photon that is received by one of said optical input ports according to an addressing instruction received at the addressing input,
and wherein, for each source of entangled photons (EPS₁, EPS₂,..., EPS_{N}), both outputs (2a, 2b) of the said source are connected to distinct optical input ports of the matrix optical switch (10).

11. An optical communication satellite (20), comprising:
- an attitude and orbit control system (21);
- an assembly (1) for emitting entangled photons into free space according to any one of the preceding claims; and
- a mission controller (22), which is connected to the attitude and orbit control system (21) and to at least one control input of the assembly (1) for emitting entangled photons in free space, said mission controller (22) being adapted to trigger emissions of pairs of entangled photons, with both photons of each pair being transmitted by the emission optics (5) common to said two photons, in respective emission directions (D7a, D7b) that are different.

12. A satellite (20) according to claim 11, wherein the assembly (1) for emitting entangled photons into free space is according to claim 10, and wherein the control input of the assembly for emitting entangled photons in free space comprises the addressing input (15) of the matrix optical switch (10) and at least one input for controlling the movement of the actuator (4a, 4b).

13. A system for transmitting entangled photons (23) comprising a satellite (20) according to claim 11 or 12, and at least two receiving stations (24a, 24b) adapted to be in optical communication with the satellite.
